# FASCICULE DE BREVET EUROPEEN

(11) **EP 2 655 146 B1**
(45) Date de publication et mention de la délivrance du brevet: **17.05.2017**
(21) Numéro de dépôt: 11791566.0
(22) Date de dépôt: 06.12.2011
(51) Int. Cl.: B60T 11/18, B60T 11/20, B60T 11/22, B60T 11/228, B60T 11/232, B60T 11/236, B60T 13/14

(54) **PISTON PRIMAIRE PLASTIQUE A INSERT FONCTIONNEL EN TÔLE EMBOUTIE POUR MAÎTRE CYLINDRE TANDEM A PÉNÉTRATION ET MAÎTRE CYLINDRE MUNI D'UN TEL PISTON**
PRIMÄRKOLBEN AUS KUNSTSTOFF MIT FUNKTIONELLEM EINSATZ AUS PRESSBLECH FÜR EINEN DURCHFÜHRUNGSARTIGEN TANDEM-MASTERZYLINDER UND MIT EINEM DERARTIGEN KOLBEN AUSGESTATTETER MASTERZYLINDER
PLASTIC PRIMARY PISTON WITH PRESSED SHEET METAL FUNCTIONAL INSERT FOR PENETRATION-TYPE TANDEM MASTER CYLINDER AND MASTER CYLINDER FITTED WITH SUCH A PISTON

(30) Priorité: 21.12.2010 FR 1005012
(43) Date de publication de la demande: 30.10.2013
(73) Titulaire: Robert Bosch GmbH, 70442 Stuttgart (DE)
(72) Inventeur: BERNADAT, Olivier, F-94170 Le Perreux (FR); LHUILLIER, Laurent, F-93150 Le Blanc Mesnil (FR); GRECH, Daniel, F-60260 Lamorlaye (FR); RODRIGUEZ, Marc, F-95280 Jouy Le Moutier (FR)
(86) Numéro de dépôt international: PCT/EP2011/071942
(87) Numéro de publication internationale: WO 2012/084500

(56) Documents cités:
- EP-A1- 1 072 381
- EP-A1- 1 403 160
- EP-A1- 1 559 933
- DE-C1- 10 130 542
- FR-A1- 2 651 838
- FR-A1- 2 788 095
- US-A- 4 831 916

## Description

### Domaine de l'invention

L'invention se rapporte à un piston primaire de maître-cylindre d'un véhicule automobile et à un maître-cylindre de véhicule muni d'un tel piston.

### Etat de la technique

Les maîtres-cylindres connus dans l'état de la technique comportent un piston primaire et un piston secondaire généralement réalisés en aluminium et montés tous deux en série dans un alésage axial d'un corps de maître-cylindre de frein, généralement réalisé en aluminium et usiné. De tels maîtres-cylindres sont décrits dans le document FR 2 827 244 ou le document US 4 831 916 A1. Une tige de poussée permet d'actionner le déplacement du piston primaire. Le piston primaire a pour rôle de mettre sous pression une chambre de pression primaire et le piston secondaire a pour rôle de mettre sous pression une chambre de pression secondaire. Des ressorts primaire et secondaire ont tendance à repousser les pistons dans le sens inverse du déplacement assurant la montée en pression.

L'alésage du maître-cylindre est alimenté en liquide de frein par deux trous d'accès d'alimentation raccordés à un réservoir de liquide de frein. Les trous d'accès d'alimentation permettent d'alimenter les chambres de pression primaire et secondaire. Ces trous débouchent dans des chambres annulaires. Des joints d'étanchéité annulaires appelés coupelles sont prévus de part et d'autre des chambres annulaires.

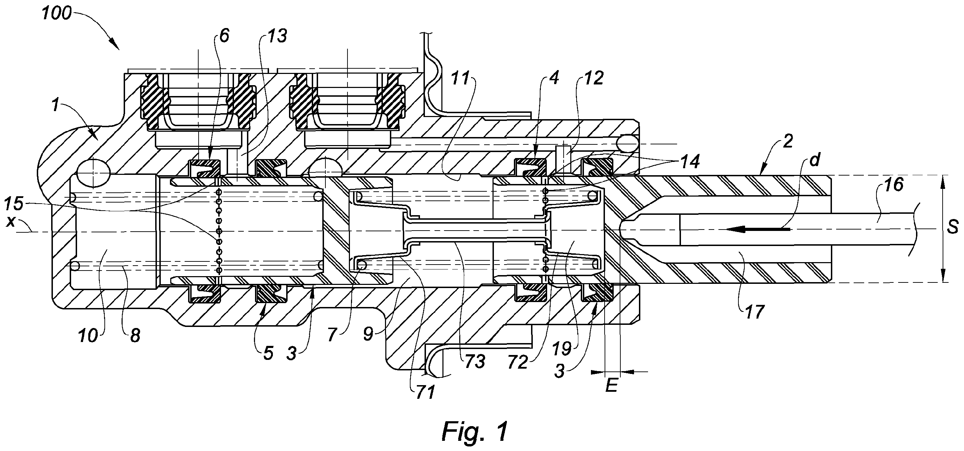

L'alimentation des chambres de pression en liquide de frein se fait lorsque les pistons sont au repos. Les pistons sont alors dans la position représentée figure 1. L'alimentation se fait par l'intermédiaire des passages prévus dans les parois des pistons et qui font alors communiquer les trous d'accès d'alimentation et les chambres annulaires avec l'intérieur des pistons primaire et secondaire donnant respectivement dans les chambres de pression primaire et secondaire. Lorsque les pistons sont mus axialement vers l'avant (sens de la flèche D sur la figure 1), les passages des pistons franchissent les joints d'étanchéité pour isoler les chambres d'alimentation et ainsi permettre l'établissement d'une pression de freinage dans les chambres de pression primaire et secondaire.

L'ensemble du maître-cylindre est susceptible d'être monté sur un servomoteur d'assistance au freinage.

Lorsque les pistons sont déplacés selon le sens de la flèche D par la tige de poussée qui exerce un appui ponctuel sur le piston primaire, la coupelle 4 isole la chambre de pression primaire du trou d'accès d'alimentation primaire et la coupelle 6 isole la chambre de pression secondaire du trou d'accès d'alimentation. Lorsque l'effort sur la tige de poussée est relâché, le volume de liquide de frein accumulé dans les freins et les ressorts du maître-cylindre repoussent les pistons en position repos. Il peut arriver, lors d'un relâché rapide de la tige de poussée, que le liquide de frein contenu dans les chambres de pression du maître-cylindre passe sous la pression atmosphérique, à cause de l'action des ressorts primaire et secondaire qui repoussent les pistons plus vite que le liquide du frein peut revenir dans le maître-cylindre. Au moment où les pistons arrivent en position repos, la communication entre le réservoir à la pression atmosphérique et chambres du maître-cylindre s'ouvrent de manière directe. Il se produit alors un passage brutal de liquide de frein qui génère du bruit dans le maître-cylindre appelé « coup de bélier ».

Afin d'améliorer les performances des maîtres-cylindres, il est nécessaire de prévoir des formes particulières sur les pistons des maîtres-cylindres en aluminium. Ces formes entraînent des surcoûts importants dus à la complexité de leur réalisation.

### But de l'invention

La présente invention a pour but de développer un piston primaire en plastique simple à réaliser, économique et capable de résister aux contraintes mécaniques dans un maître-cylindre de frein.

### Exposé et avantages de l'invention

L'invention a principalement pour objet un piston de maître-cylindre monté dans un maître-cylindre de frein du type défini ci-dessus, comprenant au moins un piston primaire et un piston secondaire montés dans l'alésage du maître-cylindre. Ces pistons permettent de créer une pression dans la chambre de pression primaire et la chambre de pression secondaire, sous l'action d'une tige de poussée exercée sur le piston primaire. Le piston primaire est moulé en matière plastique et muni d'un insert métallique en tôle emboutie surmoulée, situé entre une cavité avant du piston primaire et une cavité de réception de la tige de poussée là où la tige de poussée exerce une force pour déplacer le piston primaire et générer une pression dans le maître-cylindre. L'insert possède d'une part une forme de calotte sphérique permettant d'accueillir la tige de poussée et d'autre part une forme permettant le centrage du ressort primaire ou le centrage d'un pack ressort primaire. Le piston primaire est réalisé de manière préférentielle en un plastique thermodurcissable et de manière encore plus préférentielle en résine phénolique chargée de fibres de verre. Le pack ressort primaire est composé de deux embouts de ressort, d'une tige et du ressort primaire.

Le surmoulage permet de rendre étanche l'insert et le corps du piston primaire. La forme spécifique et la dureté de l'insert en tôle emboutie permet d'accueillir la tige de poussée et de résister au matage par la tige de poussée.

Le corps en plastique du piston et l'insert métallique confèrent au piston primaire une meilleure résistance mécanique et permettent de réduire l'épaisseur de la matière plastique et de rendre le piston primaire plus compact.

Selon une autre caractéristique avantageuse, le corps du piston primaire se réalise facilement par moulage par injection, ce qui permet la réalisation de formes complexes telles que : rainures, nervures, trous non cylindriques.

Suivant une autre caractéristique avantageuse, le corps du piston se réalise facilement par moulage par injection et le piston primaire démoulé est prêt au montage sans nécessiter l'usinage de finition, contrairement à un piston en aluminium qui nécessite une reprise d'usinage.

Suivant une autre caractéristique avantageuse, le corps du piston se réalise facilement par moulage en matière plastique thermodurcissable qui permet une rectification de surface par usinage afin d'améliorer la fiabilité du maître-cylindre.

Suivant une autre caractéristique avantageuse, le corps du piston se réalise facilement par moulage par injection en matière plastique qui permet l'amortissement des bruits engendrés par le liquide de frein (coup de bélier).

Suivant une autre caractéristique avantageuse, l'insert est réalisé en matière magnétisable afin que le piston développe un champ magnétique capable d'être détecté par un capteur de champs magnétique.

Suivant une autre caractéristique avantageuse, la forme permettant le centrage du ressort permet également le maintien de l'insert dans le moule avant l'injection de la matière plastique.

L'épaisseur de l'insert est déterminée pour résister à une pression d'essai de 40 MPa. Cette épaisseur prend en compte le diamètre du piston primaire et la section d'appui de la tige de poussée.

Les différents objets et caractéristiques de l'invention apparaîtront plus clairement dans la description et dans les figures annexées dans lesquelles :
- la figure 1 est une vue en coupe axiale d'un maître-cylindre connu selon l'état de la technique précédemment,
- la figure 2 est une vue isométrique partiellement arrachée d'un exemple de réalisation d'un piston de maître-cylindre selon l'invention avec des rainures sur l'avant du piston,
- la figure 3 est une vue partielle en coupe axiale d'un exemple de réalisation d'une partie d'un maître-cylindre selon l'invention.

La figure 1 montre un maître-cylindre de frein 100 possédant un alésage 11 recevant un piston primaire 2, un piston secondaire 3, un ressort primaire 7 et un ressort secondaire 8. Les pistons 2 et 3 ont pour rôle de mettre sous pression une chambre de pression primaire 9 et une chambre de pression secondaire 10 respectives. Un trou d'accès d'alimentation en liquide de frein 12 et un trou d'accès d'alimentation en liquide de frein 13 sont destinés à être raccordés à un réservoir de liquide de frein (non représenté). De part et d'autre du trou d'accès 12 sont prévues des coupelles 3, 4 ; de part et d'autre du trou d'accès 13 sont prévues des coupelles 5, 6. Lorsque le maître-cylindre est au repos, le piston primaire est dans la position représentée à la figure 1. Les parois des pistons sont munies de passages 14, 15 et font communiquer les trous 12, 13 avec l'intérieur des pistons et les chambres de pression primaire 9 et secondaire 8. Au repos, les coupelles 4, 6 permettent la communication entre les trous d'accès 12, 13 et ainsi les chambres de pression primaire, secondaire 9, 8 sont alimentées en liquide de frein.

Lorsque, sous l'effet d'une force de freinage exercée suivant le sens D, par une tige de poussée 16 placée dans une cavité 17 du piston primaire 2, le piston primaire est déplacé selon le sens de la flèche D, la coupelle 6 obture les passages 15 en forme de trous puis la coupelle 4 obture les passages 14. Les chambres de pression primaire et secondaire étant isolées des trous 12, 13, une pression s'établit dans les chambres 9, 10. Cette pression est proportionnelle à l'effort exercé suivant le sens D par la tige de poussée 16 placée dans la cavité 17 du piston primaire 2. Le diamètre extérieur S du piston primaire 2 forme une section exposée à la pression de la chambre primaire. Dans la cavité 17 du piston primaire, la tige de poussée 16 applique un effort pour générer une pression dans le maître-cylindre mais sur une surface nettement inférieure au minimum 4 fois. Cela provoque des contraintes importantes au niveau du piston primaire, notamment au niveau de la paroi séparant les cavités 17, 19 ; cela nécessite une épaisseur minimum de matière E entre la cavité de réception de la tige de poussée 17 et la cavité avant 19 occupée par un pack ressort primaire composé de deux embouts de ressort 71, 72, d'une tige 73 et du ressort primaire 7.

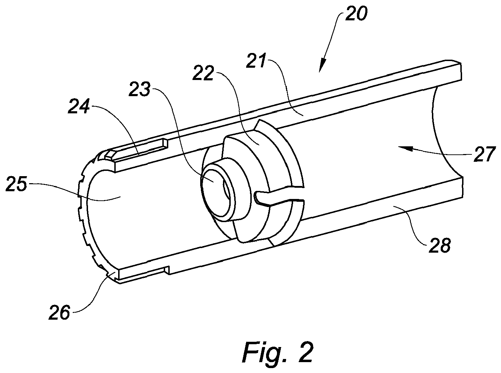

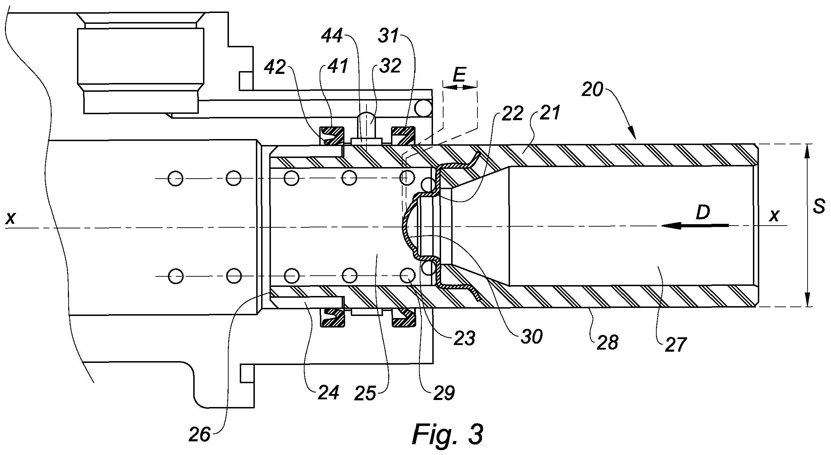

Les figures 2 et 3 montrent un piston primaire 20 de maître-cylindre caractérisé en ce qu'il est moulé en matière plastique et muni d'un insert métallique 22 en tôle emboutie, surmoulé, situé entre une cavité avant 25 du piston primaire et une cavité 27 de réception de la tige de poussée, non représentée, qui est susceptible d'exercer une force pour déplacer le piston primaire et générer une pression dans le maître-cylindre. L'insert possède, d'une part, une forme de calotte sphérique 30 permettant d'accueillir la tige de poussée et d'autre part, une forme 23 permettant le centrage du ressort primaire 29 ou le centrage du pack ressort primaire. Le piston a au moins une rainure 24. Le surmoulage permet de lier mécaniquement et de rendre étanches les deux parties du piston primaire, l'insert 22 et le corps 21. L'étanchéité de l'insert 22 et du corps 21 est réalisée par le surmoulage du corps 21 sur l'insert 22. Lors des actions de freinage, un matage de la tige de poussée sur le piston primaire se produit ; la forme spécifique et la dureté de l'insert en tôle emboutie permettent d'accueillir la tige de poussée et de résister au matage.

Les rainures 24 sont de longueur suffisante pour qu'au repos du maître-cylindre, les rainures laissent passer le liquide de frein sous le joint d'étanchéité 42 d'une coupelle 41 et déboucher dans une chambre annulaire 44 située entre des coupelles 31, 41. Ces rainures forment des passages entre la chambre de pression et la chambre annulaire 44, reliés au réservoir par un trou 32. On aurait pu envisager de réaliser les rainures 24 dans l'aluminium, mais cette réalisation aurait entraîné des surcoûts importants. L'utilisation de matière plastique permet de réduire les coûts en prévoyant les formes des rainures dans le moule. L'utilisation de ces mêmes matières plastiques oblige à augmenter les épaisseurs et à utiliser plus de matière pour palier à la différence de résistance mécanique des matériaux. Le corps en plastique et l'insert métallique confèrent au piston primaire une résistance mécanique augmentée et permettent de réduire l'épaisseur E ; dans l'invention, E est l'épaisseur de la tôle utilisée pour la fabrication de l'insert.

La forme de l'insert 22 permet de décaler le point d'appui de la tige de poussée plus en avant dans le piston primaire 20 et de rendre le piston plus compact. En outre, la mise en place de l'insert entre la cavité avant 25 et la cavité 27 permet d'avoir la résistance mécanique de l'aluminium et les avantages de la facilité de fabrication des formes complexes telles que des rainures grâce à l'utilisation de la matière plastique qui peut être moulée. De plus, cette compacité du piston primaire permet au maître-cylindre d'être plus compact et de faire des économies sur les matériaux du maître-cylindre.

Selon une autre caractéristique avantageuse, le corps 21 du piston 20 se fabrique facilement par moulage par injection. Cela permet la réalisation de formes complexes telles que les rainures 24.

Suivant une autre caractéristique avantageuse, le corps 21 du piston se fabrique facilement par moulage de matière plastique thermodurcissable qui permet une rectification de la surface 28 par usinage afin d'améliorer la fiabilité du maître-cylindre.

Suivant une autre caractéristique avantageuse, la forme de calotte sphérique 30 permettant d'accueillir la tige de poussée se trouve à l'intérieur des premières spires du ressort primaire 29.

Une autre caractéristique avantageuse est que le piston primaire 20 comporte l'insert 22 réalisé dans une matière magnétisable, afin que le piston émette un champ magnétique qui peut être détecté par un capteur de champ magnétique.

### NOMENCLATURE

- 1: corps
- 2: piston primaire
- 3: piston secondaire
- 4: coupelle
- 5: coupelle
- 6: coupelle
- 7: ressort
- 8: ressort
- 9: chambre de pression secondaire
- 10: chambre de pression primaire
- 11: alésage
- 12: trou
- 13: trou
- 14: rainures
- 15: trous
- 16: tige de poussée
- 17: cavité du piston primaire
- 18: coupelle
- 19: cavité avant
- 20: piston primaire selon l'invention
- 21: corps de piston
- 22: insert
- 23: centreur de ressort
- 24: rainure
- 25: cavité avant
- 26: face avant du piston
- 27: cavité de réception de la tige de poussée
- 28: surface du piston
- 29: ressort primaire
- 30: calotte
- 31: coupelle
- 32: trou
- 41: coupelle
- 42: joint d'étanchéité
- 44: chambre annulaire
- 71: embout de pack de ressort primaire
- 72: embout de pack de ressort primaire
- 73: tige de pack ressort primaire
- 100: maître-cylindre tandem
- E: épaisseur de matière entre les deux cavités
- S: diamètre de piston
- X: axe du maître-cylindre

## Revendications

1. Piston primaire de maître-cylindre tandem à pénétration comprenant un corps de piston avec une cavité avant (19/25) recevant le ressort primaire (7, 71, 72, 73 ; 29) et une cavité arrière (17, 27) recevant la tige de poussée (16), ces cavités (19, 17) étant séparées par une paroi,
piston primaire **caractérisé en ce que**
- le corps (20) du piston primaire est moulé en matière plastique et délimite la cavité avant (25) et la cavité arrière (27) séparées par un insert métallique (22) en tôle emboutie, surmoulée, cet insert étant situé entre la cavité avant (25) et la cavité arrière (27) recevant la tige de poussée,
- l'insert (22) ayant une calotte sphérique (30) pour accueillir la tige de poussée et un centreur (23) pour le centrage du ressort primaire (29) ou du pack ressort primaire.

2. Piston primaire selon la revendication 1,
**caractérisé en ce qu'**
il est réalisé en plastique thermodurcissable.

3. Piston primaire selon les revendications 1 et 2,
**caractérisé en ce que**
la surface (28) du piston (20) est rectifiée par usinage.

4. Piston primaire selon la revendication 1,
**caractérisé en ce qu'**
il est réalisé en matière plastique qui permet l'amortissement des bruits.

5. Piston primaire selon les revendications 1 à 4,
**caractérisé en ce que**
la forme de calotte sphérique (30) permettant d'accueillir la tige de poussée se trouve à l'intérieur des premières spires du ressort primaire (29).

6. Piston primaire selon les revendications 1 à 4,
**caractérisé en ce que**
la forme (23) permettant le centrage du ressort (29) permet également le maintien de l'insert (22) dans le moule avant l'injection de la matière plastique.

7. Piston primaire selon la revendication 1,
**caractérisé en ce que**
l'insert (22) est réalisé en tôle magnétisable pour que le piston primaire développe un champ magnétique qui peut être détecté par un capteur de champ magnétique.

8. Maître-cylindre ayant un piston primaire et un piston secondaire logés dans un alésage,
**caractérisé en ce que**
- le corps (20) du piston primaire est moulé en matière plastique et délimite la cavité avant (25) et la cavité arrière (27) séparées par un insert métallique (22) en tôle emboutie, surmoulée, cet insert étant situé entre la cavité avant (25) et la cavité arrière (27) recevant la tige de poussée,
- l'insert (22) ayant une calotte sphérique (30) pour accueillir la tige de poussée et un centreur (23) pour le centrage du ressort primaire (29) ou du pack ressort primaire.

## Patentansprüche

1. Hauptkolben eines Tandemhauptzylinders vom Durchdringungstyp, der einen Kolbenkörper mit einem vorderen Hohlraum (19/25), der die Hauptfeder (7, 71, 72, 73; 29) aufnimmt, und einem hinteren Hohlraum (17, 27), der die Schubstange (16) aufnimmt, umfasst, wobei diese Hohlräume (19, 17) durch eine Wand getrennt sind,
wobei der Hauptkolben **dadurch gekennzeichnet ist, dass**
- der Körper (20) des Hauptkolbens aus Kunststoff geformt ist und den vorderen Hohlraum (25) und den hinteren Hohlraum (27), die durch einen Metalleinsatz (22) aus überformtem gezogenem Blech getrennt sind, begrenzt, wobei sich dieser Einsatz zwischen dem vorderen Hohlraum (25) und dem hinteren Hohlraum (27), der die Schubstange aufnimmt, befindet, und
- der Einsatz (22) eine sphärische Krone (30), um die Schubstange aufzunehmen, und eine Zentriereinrichtung (23) für die Zentrierung der Hauptfeder (29) oder der Hauptfederbaugruppe aufweist.

2. Hauptkolben nach Anspruch 1,
**dadurch gekennzeichnet, dass**
er aus wärmehärtbarem Kunststoff hergestellt ist.

3. Hauptkolben nach den Ansprüchen 1 und 2,
**dadurch gekennzeichnet, dass** die Oberfläche (28) des Kolbens (20) durch spanabhebendes Bearbeiten geschliffen ist.

4. Hauptkolben nach Anspruch 1,
**dadurch gekennzeichnet, dass**
er aus Kunststoff hergestellt ist, der die Dämpfung von Geräuschen ermöglicht.

5. Hauptkolben nach den Ansprüchen 1 bis 4,
**dadurch gekennzeichnet, dass**
sich die Form der sphärischen Krone (30), die ermöglicht, die Schubstange aufzunehmen, innerhalb erster Windungen der Hauptfeder (29) befindet.

6. Hauptkolben nach den Ansprüchen 1 bis 4,
**dadurch gekennzeichnet, dass**
die Form (23), die die Zentrierung der Feder (29) ermöglicht, außerdem ein Halten des Einsatzes (22) in der Gießform vor dem Einspritzen des Kunststoffs ermöglicht.

7. Hauptkolben nach Anspruch 1,
**dadurch gekennzeichnet, dass**
der Einsatz (22) aus magnetisierbarem Blech hergestellt ist, damit der Hauptkolben ein Magnetfeld erzeugt, das durch einen Magnetfeldsensor detektiert werden kann.

8. Hauptzylinder, der einen Hauptkolben und einen Nebenkolben, die sich in einer Bohrung befinden, besitzt,
**dadurch gekennzeichnet, dass**
- der Körper (20) des Hauptkolbens aus Kunststoff geformt ist und den vorderen Hohlraum (25) und den hinteren Hohlraum (27), die durch einen metallischen Einsatz (22) aus überformtem gezogenem Blech getrennt sind, begrenzt, wobei sich dieser Einsatz zwischen dem vorderen Hohlraum (25) und dem hinteren Hohlraum (27), der die Schubstange aufnimmt, befindet,
- der Einsatz (22) eine sphärische Krone (30), um die Schubstange aufzunehmen, und eine Zentriereinrichtung (23) für die Zentrierung der Hauptfeder (29) oder der Hauptfederbaugruppe aufweist.

## Claims

1. Primary piston of a penetration-type tandem master cylinder, comprising a piston body with a front cavity (19/25) receiving the primary spring (7, 71, 72, 73; 29) and a rear cavity (17, 27) receiving the push rod (16), these cavities (19, 17) being separated by a wall,
which primary piston is **characterized in that**
- the body (20) of the primary piston is moulded in plastic and delimits the front cavity (25) and the rear cavity (27), which are separated by a metallic insert (22) of overmoulded stamped sheet metal, this insert being situated between the front cavity (25) and the rear cavity (27) receiving the push rod,
- the insert (22) having a spherical cap (30) for accommodating the push rod and a centring means (23) for centring the primary spring (29) or the primary spring pack.

2. Primary piston according to Claim 1,
**characterized in that**
it is made of a thermoset plastic.

3. Primary piston according to Claims 1 and 2,
**characterized in that**
the surface (28) of the piston (20) is ground by machining.

4. Primary piston according to Claim 1,
**characterized in that**
it is made of a plastic which allows noise damping.

5. Primary piston according to Claims 1 to 4,
**characterized in that**
the spherical cap (30) shape, which allows the push rod to be accommodated, is situated within the first turns of the primary spring (29).

6. Primary piston according to Claims 1 to 4,
**characterized in that**
the shape (23), which allows the spring (29) to be centred, also allows the insert (22) to be held in the mould before the injection of the plastic.

7. Primary piston according to Claim 1,
**characterized in that**
the insert (22) is made of magnetizable sheet metal so that the primary piston generates a magnetic field which can be detected by a magnetic field sensor.

8. Master cylinder having a primary piston and a secondary piston housed in a bore,
**characterized in that**
- the body (20) of the primary piston is moulded in plastic and delimits the front cavity (25) and the rear cavity (27), which are separated by a metallic insert (22) of overmoulded stamped sheet metal, this insert being situated between the front cavity (25) and the rear cavity (27) receiving the push rod,
- the insert (22) having a spherical cap (30) for accommodating the push rod and a centring means (23) for centring the primary spring (29) or the primary spring pack.
